# EUROPEAN PATENT APPLICATION

(11) **EP 4 604 310 A1**
(43) Date of publication of application: **20.08.2025**
(21) Application number: 23895111.5
(22) Date of filing: 27.11.2023
(51) Int. Cl.: H01M 50/59, H01M 50/211, H01M 50/586, H01M 50/178

(54) **BATTERY MODULE AND BATTERY PACK INCLUDING SAME**

(30) Priority: 25.11.2022 KR 20220160854; 24.11.2023 KR 20230165965
(71) Applicant: LG Energy Solution, Ltd., Seoul 07335 (KR)
(72) Inventor: JUNG, Hyun Ok, Daejeon 34122 (KR); CHUN, Yong Ho, Daejeon 34122 (KR)
(74) Representative: Plasseraud IP
(86) International application number: PCT/KR2023/019282
(87) International publication number: WO 2024/112184

(57) **Abstract**

The present invention relates to a battery module. The battery module includes a pouch-type cell provided with an electrode assembly, a pouch-type exterior configured to accommodate the electrode assembly, and an electrode lead electrically connected to the electrode assembly to extend to the outside of the pouch-type exterior, and a support frame provided with a lower plate disposed to correspond to a bottom surface of the pouch-type cell, and a pair of side plates extending upward from both ends of the lower plate in a width direction, respectively, to define an accommodate space for accommodating at least a portion of the pouch-type cell together with the lower plate, wherein the electrode lead is disposed on an upper portion of the pouch-type exterior so as to be exposed to the outside of the support fame through an upper opening of the support frame.

## Description

### TECHNICAL FIELD

### CROSS-REFERENCE TO RELATED APPLICATION

The present application claims the benefit of the priority of Korean Patent Application Nos. 10-2022-0160854, filed on November 25, 2022, and 10-2023-0165965, filed on November 24, 2023, which are hereby incorporated by reference in their entirety.

### TECHNICAL FIELD

The present invention relates to a battery module and a battery pack including the same.

### BACKGROUND ART

In general, secondary batteries are chargeable and dischargeable unlike primary batteries that are not chargeable and are widely used in electronic devices such as mobile phones, notebook computers, camcorders, and the like, electric vehicles, or the like. Particularly, since a lithium secondary battery has larger capacity than a nickel-cadmium battery or a nickel-hydrogen battery and has a high energy density, a degree of its utilization is rapidly increasing.

The secondary battery may be classified into a cylindrical battery or a prismatic battery in which an electrode assembly is built in a cylindrical or prismatic metal can and a pouch-type battery in which an electrode assembly is built in a pouch-type case provided as a lamination sheet.

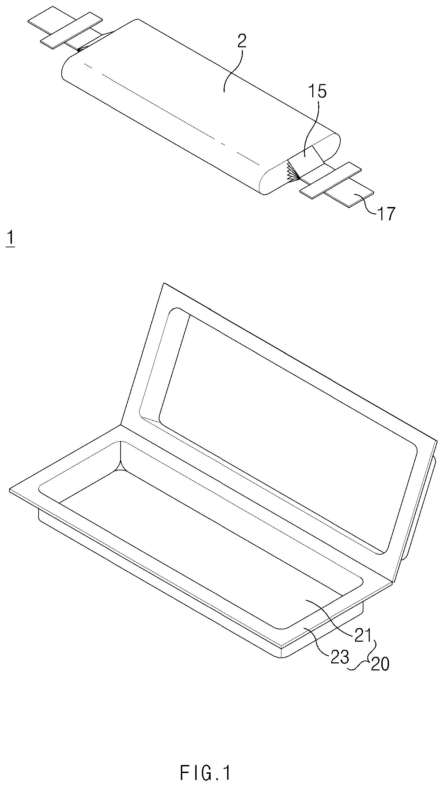

FIG. 1 is a view illustrates an example of a pouch-type secondary battery. A pouch-type secondary battery 1 (pouch cell) includes an electrode assembly 2, in which electrodes and separators are alternately stacked, and a pouch-type exterior 20 into which the electrode assembly is accommodated. Electrode tabs 15 may be connected to the electrodes of the electrode assembly 2, respectively. The electrode tabs 15 may be welded to each other on a predetermined area and then connected to an electrode lead 17 through welding. The exterior 20 includes an accommodation part 21 to accommodate the electrode assembly 2. The accommodation part 21 of the exterior 20 may be provided by one or two recessed portions. FIG. 1 illustrates an example of a receiving part 21 provided by two recessed portions. A sealing part 23 (terrace) is disposed around a circumference of the accommodation part 21 by sealing.

To improve energy density, a cell to pack (CTP) structure that assembles a pouch-type secondary battery directly into a battery pack without a module structure is currently being developed. In order to install the pouch-type secondary battery in a housing of the battery pack without the module structure, when considering a flexible structure of the pouch-type cell, a separate structure may be required to allow the pouch-type secondary battery to be independently installed in the housing of the battery pack. In addition, a separate structure may be additionally required to electrically connect leads of the pouch-type secondary batteries. However, if all of these structures are provided, space utilization may be deteriorated, and as a result, energy density may decrease.

### DISCLOSURE OF THE INVENTION

### TECHNICAL PROBLEM

An object of the present invention is to provide a battery module having a simple structure that allows a pouch-type secondary battery to be installed directly into a pack housing.

Another object of the present invention is to provide a battery module that allows a pouch-type secondary battery to be installed directly in a pack housing while having excellent space utilization and volumetric energy density.

### TECHNICAL SOLUTION

In an example, a battery module includes a pouch-type cell provided with an electrode assembly, a pouch-type exterior configured to accommodate the electrode assembly, and an electrode lead electrically connected to the electrode assembly to extend to the outside of the pouch-type exterior, and a support frame provided with a lower plate disposed to correspond to a bottom surface of the pouch-type cell, and a pair of side plates extending upward from both ends of the lower plate in a width direction, respectively, to define an accommodation space for accommodating at least a portion of the pouch-type cell together with the lower plate, wherein the electrode lead is disposed on an upper portion of the pouch-type exterior so as to be exposed to the outside of the support fame through an upper opening of the support frame.

In another example, the support frame may be provided so that a bottom surface of the lower plate is disposed to face an inner bottom surface of a pack housing configured to accommodate the plurality of battery modules and is disposed in the pack housing.

In further another example, the support frame may include the upper opening defined between the side plates at an upper end of each of the side plates, and a pair of side openings defined between the side plates at both ends of the lower plate in a longitudinal direction, respectively.

In further another example, the support frame may not include a member connected to at least one of the side plates to entirely block the side openings.

In further another example, the support frame may not include a member connected to at least one of the side plates to entirely block the upper opening.

In further another example, a length of the pouch-type exterior in a horizontal direction may be equal to or less than twice a height of the pouch-type exterior.

In further another example, the battery module may further include a guide plate disposed above the pouch-type cell and having an insertion slot into which the electrode lead is inserted.

In further another example, the guide plate may include a first guide plate disposed above the pouch-type cell and having a first insertion slot into which a positive electrode lead of the electrode lead is inserted, and a second guide plate disposed above the pouch-type cell so as to be spaced apart from the first guide plate and having a second insertion slot into which a negative electrode lead of the electrode lead is inserted.

In further another example, the guide plate may further include a connection plate configured to electrically connect a positive electrode lead, which is not inserted into the first insertion slot, to a negative electrode lead, which is not inserted into the second insertion slot.

In further another example, the battery module may further include a guide plate connected to the support frame above the pouch-type cell, wherein the pouch-type cell may be provided in plurality, and each of the plurality of pouch-type cells may include a pair of leads that are disposed to be spaced apart from each other.

In further another example, when a group of electrode leads disposed adjacent to each other among the electrode leads of the pouch-type cells is referred to as a first lead group, and a group of other electrode leads disposed to be spaced apart from the first lead group and adjacent to each other is referred to as a second lead group, the guide plate may include a first guide plate electrically connected by being in contact with at least one electrode lead of the first lead group and including a first electrode terminal, a second guide plate disposed to be spaced apart from the first guide plate, electrically connected by being in contact with at least one electrode lead of the second lead group, and including the second electrode terminal, and a connection plate configured to be electrically connected by being in contact with the electrode lead of the first lead group, which is not in contact with the first guide plate, to the electrode lead of the second lead group, which is not in contact with the second guide plate.

In further another example, when a group of electrode leads disposed adjacent to each other among the electrode leads of the pouch-type cells is referred to as a first lead group, and a group of other electrode leads disposed to be spaced apart from the first lead group and adjacent to each other is referred to as a second lead group, the guide plate may include a first guide plate electrically connected by being in contact with at least one electrode lead of the first lead group and including a first electrode terminal, a second guide plate disposed to be spaced apart from the first guide plate, electrically connected by being in contact with at least one electrode lead of the second lead group, and including the second electrode terminal, a first connection plate electrically connected by being in contact with the plurality of electrode leads of the first lead group, which are not in contact with the first guide plate, and a second connection plate configured to be electrically connected by being in contact with the plurality of electrode leads of the second lead group, which are not in contact with the second guide plate to each other.

In further another example, when a group of electrode leads disposed adjacent to each other among the electrode leads of the pouch-type cells is referred to as a first lead group, and a group of other electrode leads disposed to be spaced apart from the first lead group and adjacent to each other is referred to as a second lead group, the guide plate may include a first guide plate electrically connected by being in contact with at least one electrode lead of the first lead group and including a first electrode terminal, a second guide plate electrically connected by being in contact with the electrode lead of the first lead group, which is not in contact with the first guide plate and including a second electrode terminal, and a connection plate configured to be electrically connected by being in contact with the plurality of electrode leads of the second lead group.

In further another example, a battery pack includes a plurality of battery modules, and a pack housing configured to accommodate the plurality of battery modules, wherein each of the battery modules includes a pouch-type cell provided with an electrode assembly, a pouch-type exterior configured to accommodate the electrode assembly, and an electrode lead electrically connected to the electrode assembly to extend to the outside of the pouch-type exterior, and a support frame provided with a lower plate disposed to correspond to a bottom surface of the pouch-type cell, and a pair of side plates extending upward from both ends of the lower plate in a width direction, respectively, to define an accommodate space for accommodating at least a portion of the pouch-type cell together with the lower plate, wherein the electrode lead is disposed on an upper portion of the pouch-type exterior so as to be exposed to the outside of the support fame through an upper opening of the support frame.

In further another example, the support frame may be disposed within the pack housing so that a bottom surface of the lower plate is disposed to face an inner bottom surface of the pack housing.

In further another example, the battery module may further include a first guide plate disposed above the pouch-type cell and having a first insertion slot into which a positive electrode lead of the electrode lead is inserted, and a second guide plate disposed above the pouch-type cell so as to be spaced apart from the first guide plate and having a second insertion slot into which a negative electrode lead of the electrode lead is inserted.

In further another example, a battery module includes a plurality of battery cells, each of which is provided with an electrode assembly, an exterior configured to accommodate the electrode assembly, and a pair of electrode leads electrically connected to the electrode assembly to extend to the outside of the exterior, a support frame configured to accommodate at least a portion of the battery cells, and a guide plate connected to the support frame and electrically connected to the battery cells, wherein the guide plate includes a first guide plate, which is electrically connected by being in contact with a portion of the electrode leads of the battery cells, and including a first electrode terminal, a second guide plate, which is electrically connected by being in contact with the other portion of the electrode leads of the battery cells, and including a second electrode terminal, and a connection plate, which is in contact with and electrically connected to another portion of the electrode leads of the battery cells to electrically connect the first electrode terminal to the second electrode terminal.

In further another example, the first guide plate may be bent so that the first electrode terminal is disposed on a face of a polyhedron defined by the battery cells, which is different from a face on which the electrode lead electrically connected by being in contact with oneself protrudes among faces of the polyhedron.

### ADVANTAGEOUS EFFECTS

According to the present invention, the pouch-type cells may be directly installed in the pack housing using the support frame having the simple structure to improve the space utilization and the volumetric energy density.

In addition, according to the present invention, the electrode lead may be disposed on the upper portion of the pouch-type exterior to ensure ease of the installation work, and the volume and the resistance of the pouch-type cell may be minimized by specifically limiting the length and height of the pouch-type exterior.

Furthermore, according to the present invention, the various pouch cells within the support frame may be variously electrically connected to each other through the guide plate to realize the various capacity, voltage, or current characteristics with the simple structure of the guide plate.

Furthermore, according to the present invention, the position of the electrode terminal for connection to the external device may be easily changed just by changing the shape of the guide plate.

### BRIEF DESCRIPTION OF THE DRAWINGS

FIG. 1 is a view illustrating an example of a pouch-type secondary battery.
FIG. 2 is a perspective view of a battery module according to Embodiment 1 of the present invention.
FIG. 3 is an exploded perspective view of the battery module of FIG. 2.
FIG. 4 is a perspective view illustrating a first modified example of a guide plate of FIG. 2.
FIG. 5 is a perspective view illustrating a second modified example of the guide plate of FIG. 2.
FIG. 6 is a perspective view illustrating a first modified example of electrical connection of the guide plate of FIG. 2.
FIG. 7 is a perspective view illustrating a second modified example of the electrical connection of the guide plate of FIG. 2.
FIG. 8 is perspective view illustrating a third modified example of the electrical connection of the guide plate of FIG. 2.
FIG. 9 is a perspective view illustrating a fourth modified example of the electrical connection of the guide plate of FIG. 2.
FIG. 10 is a perspective view illustrating a fifth modified example of the electrical connection of the guide plate of FIG. 2.
FIG. 11 is perspective view illustrating a sixth modified example of the electrical connection of the guide plate of FIG. 2.
FIG. 12 is a perspective view illustrating a seventh modified example of the electrical connection of the guide plate of FIG. 2.
FIG. 13 is a perspective view of a battery pack according to Embodiment 2 of the present invention.
FIG. 14 is an exploded perspective view of the battery pack of FIG. 13.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

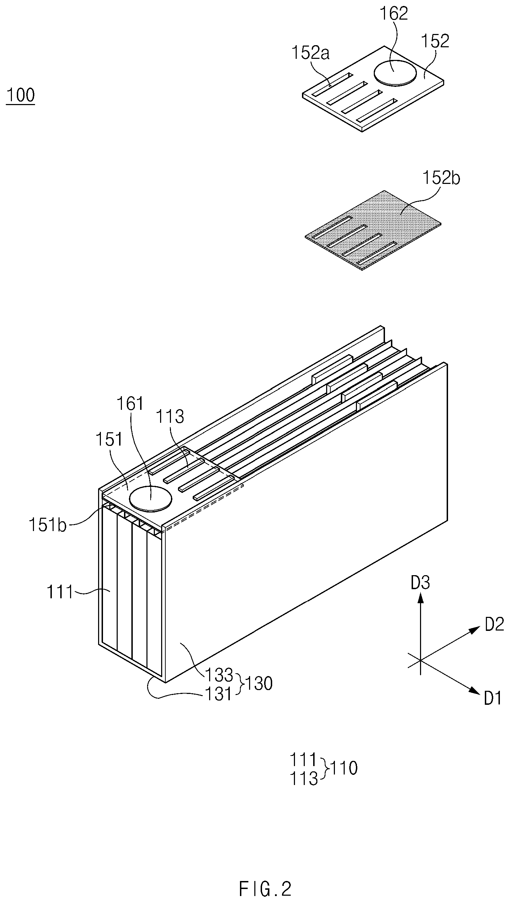

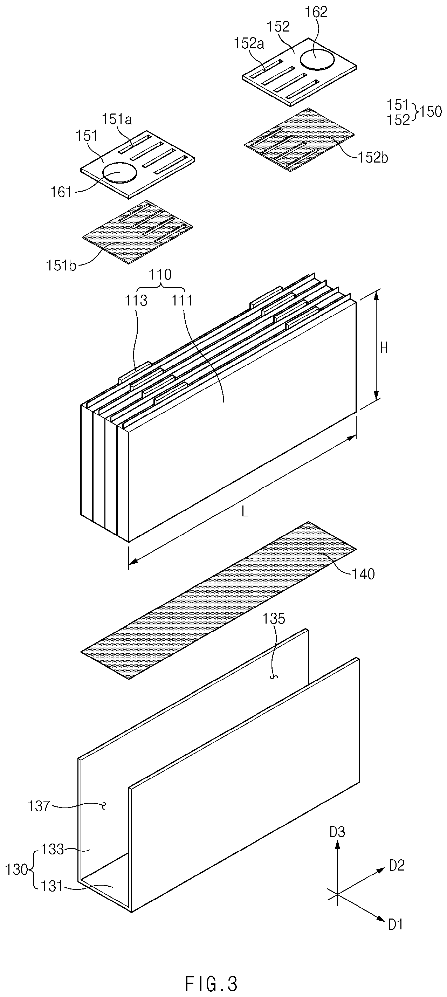

FIG. 2 is a perspective view of a battery module 100 according to Embodiment 1 of the present invention, and FIG. 3 is an exploded perspective view of the battery module 100 of FIG. 2. As illustrated in FIGS. 2 and 3, the battery module 100 according to this embodiment may include a battery cell 110 and a support frame 130 that supports the battery cell 110. The battery cell may be a pouch-type cell. Hereinafter, the battery module 100 according to this embodiment will be mainly described with reference to FIG. 3. For reference, contents of Embodiment 1 may be equally applied to embodiments/modified examples described later, as long as there is no conflict.

### Pouch-type cell 110

The pouch-type cell 110 may include an electrode assembly (see FIG. 1). The electrode assembly may be provided by alternately stacking electrodes and separators. The electrodes may comprise a positive electrode and a negative electrode. The electrode assembly may be provided with an electrode tab (see FIG. 1) connected to the electrodes. The electrode tab may be provided separately or may be provided as a portion of a current collector constituting the electrode.

The pouch-type cell 110 may include a pouch-type exterior 111. The pouch-type exterior 111 may be an exterior formed by molding a laminate sheet to accommodate the electrode assembly. The pouch-type exterior 111 may be prepared by sealing two exteriors disposed to face each other in a state in which the electrode assembly is accommodated. Here, edges of the two exteriors may be completely sealed. A sealing part (see FIG. 1) may be provided through the sealing. Alternatively, the pouch-type exterior 111 may be provided by folding one exterior (see FIG. 1). Here, the remaining edge of the one exterior may be sealed except for the folded portion of the one exterior.

The pouch-type exterior 111 may be manufactured from a laminate sheet including a metal layer such as aluminum, a first resin layer disposed on an inner surface of the metal layer, and a second resin layer disposed on an outer surface of the metal layer. The first resin layer may be a layer made of polypropylene (PP). High insulation and corrosion resistance are required for the first resin layer, and the first resin layer may be made of another resin that satisfies these requirements. The second resin layer may be a layer made of polyethylene terephthalate (PET). The second resin layer may need to electrically insulate the secondary battery while protecting the secondary battery, and the second resin layer may be made of another resin that satisfies these requirements.

The pouch-type cell 110 may include an electrode lead 113. The electrode lead 113 may be electrically connected to the electrode assembly to extend to the outside of the pouch-type exterior 111. One end of the electrode lead 113 may be connected to the electrode tabs by being welded to the electrode tabs on a predetermined area. The other end of the electrode lead 113 may extend to the outside of the pouch-type exterior 111 and be exposed to the outside of the pouch-type exterior 111.

### Support frame 130

The support frame 130 may include a lower plate 131. The lower plate 131 may be a flat plate disposed to correspond to a bottom surface of the pouch-type cell 110. In this embodiment, the bottom surface of the pouch-type cell 110 may be any surface of the pouch-type cell 110, which is opposite to a top surface of the pouch-type cell 110, from which the electrode lead 113 protrudes. For reference, the top surface may vary depending on a viewing direction.

The support frame 130 may include a pair of side plates 133. The side plates 133 may be flat plates extending from both ends of the lower plate 131 in a width direction D1 to an upper side D3. The side plates 133 together with the lower plate 131 may define an accommodation space for accommodating at least a portion of the pouch-type cell 110.

As illustrated in FIG. 2, the support frame 130 may accommodate a plurality of pouch-type cells 110 in the accommodation space defined by the lower plate 131 and the side plates 133. An even number of pouch-type cells 110 may be accommodated in the accommodation space of the support frame 130. For example, four or six pouch-type cells 110 may be accommodated.

The support frame 130 may include an upper opening 135 as illustrated in FIG. 3. The upper opening 135 may be defined between the side plates 133 at an upper end of each of the side plates 133. The support frame 130 may include a pair of side openings 137. The side openings 137 may be defined between the side plates 133 at both ends of the lower plate 131 in a longitudinal direction D2.

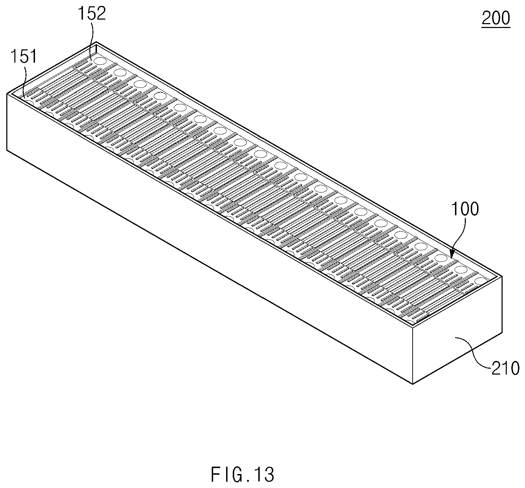

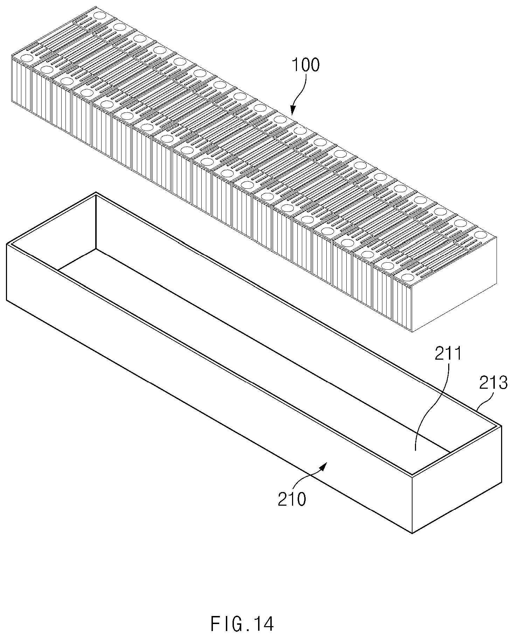

The support frame 130 may provide a support structure for installing the pouch-type cells 110 in a pack housing 210 (see FIGS. 13 and 14), which will be described later. Due to flexible characteristics of the pouch-type cell 110, it may not be easy to be installed directly into the pack housing 210. The pouch-type cell 110 may droop or be bent within the pack housing 210 if there is no separate support structure. In the related art, in order to install the pouch-type cells 110 in the pack housing 210, the module housing that entirely surrounds the pouch-type cells 110 without a separate opening was used. The support frame 130 according to this embodiment may be provided in a shape including an upper opening 135 and side openings 137 and may provide a support structure for directly installing the pouch-type cells 110 in the pack housing 210 while having a simpler structure than the typical module housing.

Thus, according to this embodiment, the pouch-type cells 110 may be directly installed in the pack housing 210 using the support frame 130 having the simple structure to improve space utilization and volumetric energy density. Even compared to prismatic-type cells, it may show similar or higher space utilization.

In order to maintain the side opening 137, the support frame 130 may not include a member that is connected to at least one of the side plates 133 to entirely block the side opening 137. However, in order to prevent the pouch-type cell 110 from being separated from the accommodation space of the support frame 130 through the side opening 137, a hook protrusion protruding upward from a distal end of the lower plate 131 in the longitudinal direction D2 may be considered. Here, the hook protrusion may have a height less than that of the side plate 133 to maintain the side opening 137.

In order to maintain the upper opening 135, the support frame 130 may not include a member that is connected to at least one of the side plates 133 to entirely block the upper opening 135. The battery module 100 according to this embodiment may include a guide plate 150, which will be described later and is capable of partially block the upper opening 135. The guide plate 150 may be provided in a shape that blocks only a portion of the upper opening 135, as will be described later.

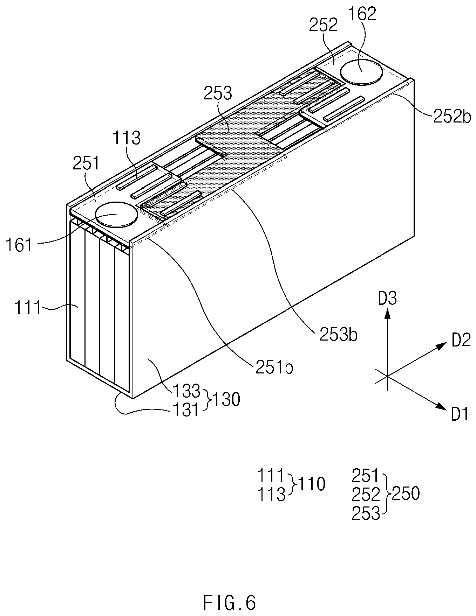

As will be described later, the support frame 130 may be provided so that the bottom surface of the lower plate 131 faces an inner bottom surface of the pack housing 210 (see FIGS. 13 and 6) and is disposed within the pack housing 210. It may also be considered that the support frame 130 is disposed within the pack housing 210 so that the upper opening 135 of the support frame 130 faces the inner bottom surface of the pack housing 210. However, the former installation structure may more stably install the support frame 130 within the pack housing 210 than the latter installation structure.

A thermally conductive resin 140 may be provided on the top surface of the lower plate 131 of the support frame 130. The bottom surface of the pouch-type cell 110 may be in contact with the top surface of the lower plate 131, and when the thermally conductive resin 140 is provided between the top surface of the lower plate 131 and the bottom surface of the pouch-type cell 110, heat of the pouch-type cell 110 may be easily transferred to the support frame 130, and thus, the pouch-type cell 110 may be efficiently cooled. In addition, the thermally conductive resin 140 may have adhesive strength. As a result, the pouch-type cell 110 may be stably fixed in the accommodation space of the support frame 130. The thermally conductive resin 140 may be in the form of resin or paste.

For reference, in the case of the battery module according to this embodiment, performance deviation for position may be small compared to the prismatic-type battery in which a jelly roll-type electrode assembly is accommodated. Since the jelly roll-type electrode assembly has a structure in which the electrodes and the separator are rolled up, the performance deviation may be large depending on an internal position of the electrode assembly. Particularly, diffusion of electrolyte or heat may be restricted by the current collector at a center of the jelly roll-type electrode assembly. In contrast, in the case of the battery module according to this embodiment, several pouch-type cells having the same structure may be accommodated within one support frame (for example, a space within one support frame is divided equally into four, and then, one pouch-type cell is disposed in each divided space), and thus, the performance deviation for position may be small, and a deviation in material deterioration may also be small.

### Arrangement of electrode lead 113

The electrode lead 113 according to this embodiment may be disposed on an upper portion the pouch-type exterior 111 and be exposed to the outside of the support frame 130 through the upper opening 135 of the support frame 130 (see FIG. 2). When the battery module 100 is disposed within the pack housing 210 so that the bottom surface of the lower plate 131 of the support frame 130 faces the inner bottom surface of the pack housing 210 (see FIGS. 13 and 6), if the electrode lead 113 of the pouch-type cell 110 is exposed to an upper side of the support frame 130, the electrical connection of the pouch-type cells 110 may be easily performed. This may be easily understood in contrast to the case in which the electrode lead 113 of the pouch-type cell 110 is exposed to a side of the support frame 130 through the side opening 137 of the support frame 130.

Even if the electrode lead 113 is disposed on an upper portion of the pouch-type exterior 111, a volume occupied by the pouch-type cell 110 may increase compared to the case in which the electrode lead 113 is disposed on a side portion of the pouch-type exterior 111, which is undesirable when considering the volumetric energy density. In order to prevent an increase in volume, a length L of the pouch-type exterior 111 in a horizontal direction D2 may be equal to or less than twice a height H of the pouch-type exterior 111.

This will be described with reference to FIG. 3. When two electrode leads 113 protrude one by one from a left end and a right end of the pouch-type exterior 111, an area occupied by the electrode leads 113 may be twice a value obtained by multiplying a protrusion height of the electrode lead 113 by a height H of the pouch-type exterior 111. In contrast, when the two electrode leads 113 protrude together from an upper end of the pouch-type exterior 111 as illustrated in FIG. 3, an area occupied by the electrode leads 113 may be a value obtained by multiplying a protrusion height of the electrode lead 113 by a length L of the pouch-type exterior 111. Thus, when a thickness (see direction D1) of the pouch-type exterior 111 is the same, if the length L of the pouch-type exterior 111 is equal to or less than twice the height H of the pouch-type exterior 111, even though the electrode lead 113 is disposed on an upper portion of the pouch-type exterior 111, the volume due to the electrode leads 113 may be equal or less compared to the case in which the electrode leads 113 is disposed at the side portion of the pouch-type exterior 111.

In addition, even if the electrode lead 113 is disposed on the upper portion of the pouch-type exterior 111, resistance of the pouch-type cell 110 may increase compared to the case in which the electrode lead 113 is disposed on the side portion of the pouch-type exterior 111, which is undesirable when considering fast charging performance or lifespan characteristics. In order to prevent an increase in resistance, the length L of the pouch-type exterior 111 in the horizontal direction D2 may be one or more times the height H of the pouch-type exterior 111.

This will be described with reference to FIG. 3. When the electrode lead 113 is placed on the side portion of the pouch-type exterior 111, the resistance of the pouch-type cell 110 may be affected by the length L of the pouch-type exterior 111 (more precisely, the length of the electrode assembly accommodated in the pouch-type exterior), and when the electrode lead 113 is disposed on the upper portion of the pouch-type exterior 111, the resistance of the pouch-shaped cell 110 may be affected by the height H of the pouch-type exterior 111 (more precisely, the height of the electrode assembly accommodated in the pouch-type exterior). Thus, if the electrode lead 113 has the same area when disposed on the upper portion of the pouch-type exterior 111, when the height H of the pouch-type exterior 111 decreases, it may be preferable in terms of reducing the resistance.

### Guide plate 150

The battery module 100 according to this embodiment may include a guide plate 150. The guide plate 150 may be disposed above the pouch-type cell 110. The guide plate 150 may include insertion slots 151a and 152a into which the electrode lead 113 is inserted.

More specifically, the guide plate 150 may include a first guide plate 151 and a second guide plate 152.

The first guide plate 151 may be disposed above the pouch-type cell 110. The first guide plate 151 may include a first insertion slot 151a into which one of the electrode leads 113, for example, a positive electrode lead is inserted. The first guide plate 151 may include a first electrode terminal 161 for electrical connection to an external device. The first guide plate 151 may be electrically connected to the electrode lead 113 through contact. For this, the first guide plate 151 may include a first conductive plate 151b having conductivity. The first conductive plate 151b may also be electrically connected to the first electrode terminal 161. For example, when the electrode lead 113 is inserted into the first insertion slot 151a, the electrode lead 113 may be in contact with the first conductive plate 151b, and thus, the electrode lead 113 may be electrically connected to the first electrode terminal 161 by using the first conductive plate 151b as a medium. In the first guide plate 151, a portion other than the first electrode terminal 161 and the first conductive plate 151b may be made of a non-conductive material. For reference, the first guide plate 151 may include a medium other than the conductive plate for electrical connection through the contact. For example, the first guide plate may include a conductive wire instead of the conductive plate. This is the same for the second guide plate, which will be described later.

The second guide plate 152 may be disposed above the upper side of the pouch-type cell 110. The second guide plate 152 may include a second insertion slot 152a into which one of the electrode leads 113, for example, a negative electrode lead is inserted. The second guide plate 152 may include a second electrode terminal 162 for electrical connection to the external device. The second guide plate 152 may be electrically connected to the electrode lead 113 by contact. For this, the second guide plate 152 may include a second conductive plate 152b having conductivity. The second conductive plate 152b may also be electrically connected to the second electrode terminal 162. For example, when the electrode lead 113 is inserted into the second insertion slot 152a, the electrode lead 113 may be in contact with the second conductive plate 152b, and thus, the electrode lead 113 may be electrically connected to the second electrode terminal 162 by using the second conductive plate 152b as a medium. In the second guide plate 152, a portion other than the second electrode terminal 162 and the second conductive plate 152b may be made of a non-conductive material.

The first and second guide plates 151 and 152 may be spaced apart from each other and may be disposed to cover only a portion of the upper opening 135 of the support frame 130.

The first and second guide plates 151 and 152 may align the pouch-type cell 110 within the support frame 130 by inserting the electrode leads 113 into the insertion slots 151a and 152a.

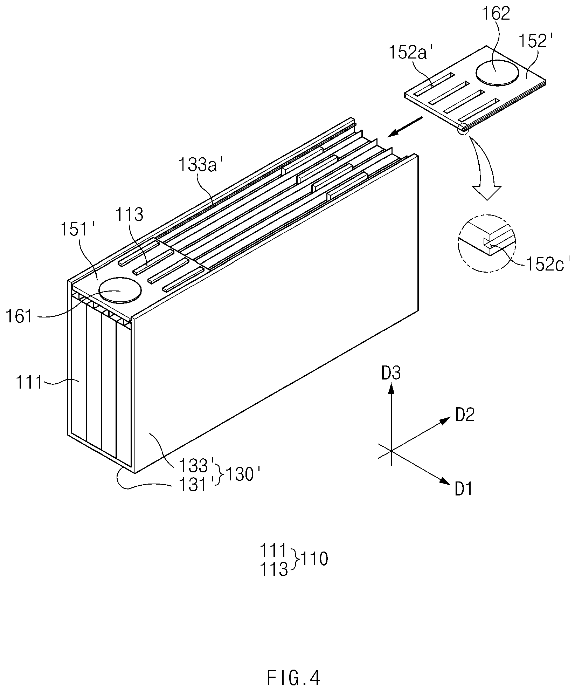

The first and second guide plates 151 and 152 may be directly connected to the support frame 130 by adhesive or welding. Alternatively, as illustrated in FIG. 4, first and second guide plates 151' and 152' may be connected to a support frame 130' through a protrusion/groove structure. FIG. 4 is a perspective view illustrating a first modified example of the guide plate of FIG. 2. As illustrated in FIG. 4, a groove 152c' may be defined in a side surface of the guide plate 152'. Correspondingly, a protrusion 133a' may be disposed on an inner surface of the side plate 133' of the support frame 130' in a direction corresponding to a longitudinal direction D2 of a lower plate 131'. Alternatively, it is possible to have a protrusion disposed on the guide plate and a grooves defined in the side plate.

Due to this structure of the protrusion/groove, the guide plate 152' may be coupled to or separated from the side plate 133' by sliding. Alternatively, after spreading the side plates 133' in the direction D1 of FIG. 4 and an opposite direction thereof, the guide plate 152' may descend to insert the electrode lead 113 into the insertion slot 152a', and then, the side plates 133' may return to couple the protrusion 133a' to the groove 152c'.

Here, the protrusion/groove structure may be only partially provided. For example, the groove 152c' may be defined only at a portion of a side surface of the guide plate 152', and the protrusion 133a' may be provided at only a portion of the inner side of the side plate 133' to correspond to the groove 152c'. When the protrusion/groove structure is only partially provided, the groove 152c' of the guide plate 152' may be a groove closed in the direction D2 and the opposite direction thereof. For example, the groove 152c' of the guide plate 152' may not be defined in an end of the side surface of the guide plate 152' in the direction D2 and an end in the opposite direction thereof. The protrusion 133a' of the side plate 133' may also be provided correspondingly. If the structure of the protrusion/groove is like this, the side plates 133' may be spread, and the guide plate 152' may be inserted between the side plates 133', and then, the guide plate 152' may not move in the direction D2 and the opposite direction thereof.

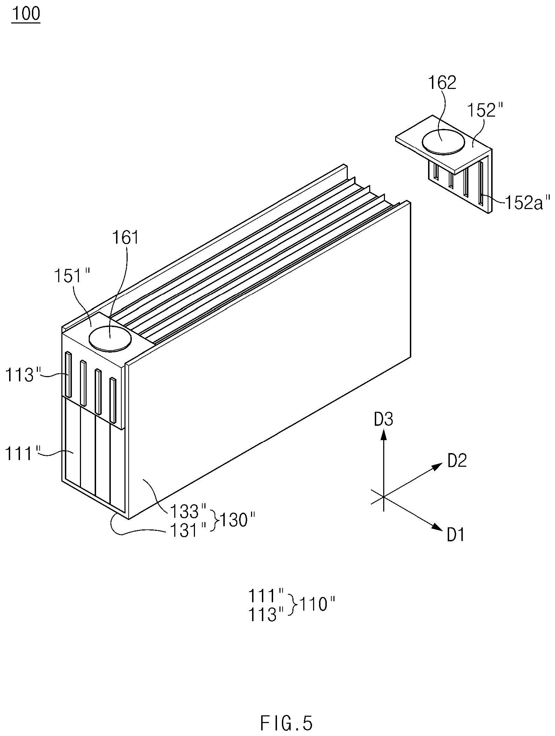

First and second guide plates 151'' and 152'' may be provided in a bent structure as illustrated in FIG. 5. FIG. 5 is a perspective view illustrating a second modified example of the guide plate of FIG. 2. As illustrated in FIG. 5, the guide plate 152'' includes an upper plate that covers a portion of the upper opening 135 (see FIG. 3) of a support frame 130'', and a side plate that is vertically bent at one end of the upper plate to cover a portion of the side opening 137 (see FIG. 3). A slot 152a" may be defined in one of the upper plate and the side plate, and an electrode terminal 162 may be disposed on the other plate.

When a plurality of pouch-type cells 110 are aligned within the support frame 130'', one polyhedron (a rectangular parallelepiped in the case of FIG. 5) may be provided. For electrical connection to the external device, in faces of the polyhedron, a face on which the electrode lead 113'' protrudes may need to be different from a face on which the electrode terminal 162 is disposed. For example, as illustrated in FIG. 5, the electrode lead 113'' may need to protrude from a side surface of the polyhedron, and the electrode terminal 162 may need to be disposed on a top surface of the polyhedron. If the guide plate 152'' has a bent structure, the electrode terminal 162 may be placed on a surface different from the surface on which the electrode lead 113'' protrudes.

As described above, one or both of the first and second guide plates 151'' and 152'' may have the bent structure so that, in the faces of the polyhedron defined by the plurality of cells 110, the electrode terminal is disposed on a face different from the face on which the electrode lead 113'', which is electrically connected to the cell 110, protrudes.

### Implementation of electrical connection by guide plate 150

The first and second guide plates 151 and 152 may be used to electrically connect the electrode leads 113. For example, in the case of FIG. 2, the first guide plate 151 may electrically connect four positive electrode leads, and the second guide plate 152 may electrically connect four negative electrode leads. Thus, the plurality of cells 110 may be electrically connected to each other in parallel. A portion of the electrode lead 113 that passes through the insertion slots 151a and 152a and is exposed to the outside of the guide plate 150 may be folded toward the top surface of the guide plate 150. For reference, the positive and negative electrode leads described above may be described as an example, and the arrangement of the positive and negative electrode leads may be different from the arrangement in FIG. 2.

The guide plate 250 may further include a connection plate 253 as illustrated in FIG. 6 to electrically connect a positive electrode lead, which is not inserted into the first insertion slot 151a, to a negative electrode lead, which is not inserted into the second insertion slot 152a. FIG. 6 is a perspective view illustrating a first modified example of electrical connection of the guide plate of FIG. 2.

In the case of FIG. 6, two of the four positive electrode leads may be electrically connected to each other by the first guide plate 251, two of the four negative electrode leads may be connected to each other by the second guide plate 252, and the remaining two positive electrode leads and the two negative electrode leads may be electrically connected to each other by the connection plate 253. The connection plate 253 may be provided in a Z-shape to electrically connect the positive and negative electrode leads disposed in the diagonal direction. For reference, the first and second guide plates 251 and 252 and the connection plate 253 may include conductive plates 251b, 252b and 253b, respectively, for electrical connection to the electrode leads.

The guide plate may include only the first and second guide plates or may further include a connection plate depending on the required electrical connection method. The shapes of the first and second guide plates or the shape of the connection plate may also be changed depending on the required electrical connection method. This is described in detail below.

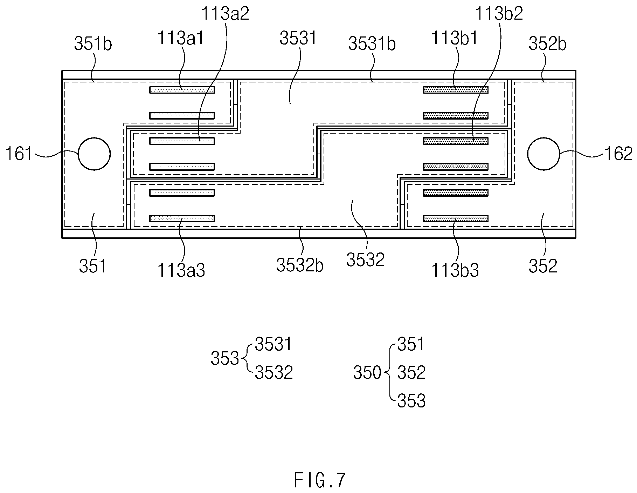

FIG. 7 is a perspective view illustrating a second modified example of the electrical connection of the guide plate of FIG. 2. As illustrated in FIG. 7, the guide plate 350 may include first and second guide plates 351 and 352 and a connection plate 353. For reference, a plurality of battery cells may be provided. The battery cell may be a pouch-type cell or another type of cell. Each of the plurality of battery cells may include a pair of electrode leads (e.g., a positive electrode lead and a negative electrode lead) that are spaced apart from each other.

The first guide plate 351 may be electrically connected by being in contact with any portion 113a1 of the electrode leads of the battery cells. For example, when a group of electrode leads 113a1, 113a2, and 113a3 disposed adjacent to each other among the electrode leads of battery cells is referred to as a first lead group, and a group of other electrode leads 113a1, 113a2, and 113a3 disposed spaced apart from the first lead group and adjacent to each other is referred to as a second lead group, the first guide plate 351 may be electrically connected by being in contact with at least one electrode lead 113a1 belonging to the first lead group. The first guide plate 351 in FIG. 7 is exemplarily electrically connected to the two electrode leads 113a1 of the first lead group. The first guide plate 351 may include a conductive plate 351b for electrical connection through contact. The first guide plate 351 may include a first electrode terminal 161. For reference, in FIG. 7, all the left electrode leads 113a1, 113a2, and 113a3 may be positive electrode leads, and all the right electrode leads 113b1, 113b2, and 113b3 may be negative electrode leads, but the present invention is not limited thereto.

The second guide plate 352 may be electrically connected by being in contact with another portion 113b3 of the electrode leads of the battery cells. For example, the second guide plate 352 may be electrically connected by being in contact with at least one electrode lead 113b3 belonging to the second lead group. The second guide plate 352 in FIG. 7 is exemplarily electrically connected to the two electrode leads 113b3 of the second lead group. The second guide plate 352 may include a conductive plate 352b for electrical connection through contact. The second guide plate 352 may be disposed to be spaced apart from the first guide plate 351. In addition, the second guide plate 352 may include a second electrode terminal 162.

The connection plate 353 may be electrically connected by being in contact with other portions of the electrode leads 113a2, 113a3, 113b1, and 113b2 of the battery cells. Here, all other portions of the electrode leads of the battery cells may be remaining electrode leads that are not connected to the first and second guide plates 351 and 352. For example, the connection plate 353 may be in contact with all or a portion of the electrode leads, which are not in contact with the first guide plate 351 among the electrode leads 113a1, 113a2, and 113a3 belonging to the first lead group, and all or a portion of the electrode leads, which are not in contact with the second guide plate 352 among the electrode leads 113b1, 113b2, and 113b3 belonging to the second lead group to connect the electrode leads to each other. The connection plates 353 (3531 and 3532) may include conductive plates 3531b and 3532b for electrical connection by contact.

In FIG. 7, a connection plate 353 including a first connection plate 3531 that electrically connects a portion 113a2 of the electrode leads not in contact with the first guide plate 351 among the electrode leads 113a1, 113a2, and 113a3 belonging to the first lead group to a portion 113b1 of the electrode leads that is not in contact with the second guide plate 352 among the electrode leads 113b1, 113b2, and 113b3 belonging to the second lead group, and a second connection plate 3532 that electrically connects the other portion 113a3 of the electrode leads, which are not in contact with the first guide plate 351, among the electrode leads belonging to the first lead group, to the other portion 113b2 of the electrode leads belonging to the second lead group, which is not in contact with the second guide plate 352, will be described as an example.

The connection plate 353 may electrically connect the first electrode terminal 161 of the first guide plate 351 to the second electrode terminal 161 of the second guide plate 352 when the battery module operates. For example, in the case of FIG. 7, the first electrode terminal 161 of the first guide plate 351 may be connected to the second electrode terminal 162 of the second guide plate 353 through the electrical connection (113a1 → 113b1 → 113a2 → 113b2 → 113a3 → 113b3) of the electrode leads.

The shapes of the first and second guide plates 351 and 352 and the connection plate 353 may be determined by considering the arrangement of elements (electrode terminals and electrode leads) to be electrically connected. FIG. 7 illustrates guide plates 351 and 352 provided in an L-shape to connect the electrode terminals 161 and 162 to some electrode leads 113a1 and 113b3 of the lead group and connection plates 3531 and 3532 provided in a Z-shape to connect some electrode leads 113a2, etc. of the first lead group to some electrode leads 113b1, etc. of the second lead group as an example.

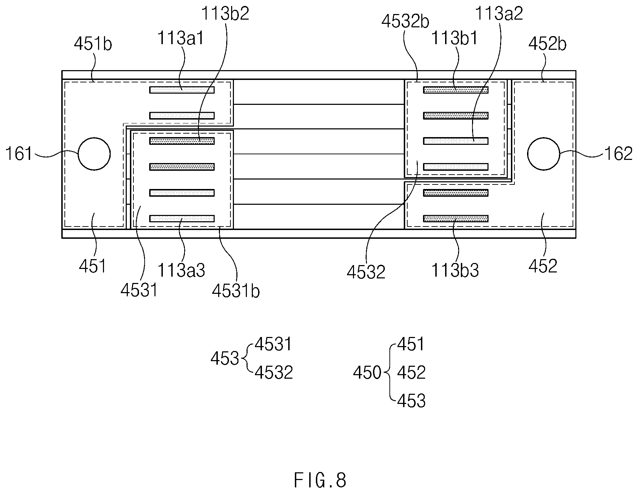

FIG. 8 is perspective view illustrating a third modified example of the electrical connection of the guide plate of FIG. 2. As illustrated in FIG. 8, the guide plate 450 may include first and second guide plates 451 and 452 and a connection plate 453.

The first guide plate 451 may be electrically connected by being in contact with any portion 113a1 of the electrode leads of the battery cells. For example, when a group of electrode leads 113a1, 113b2, and 113a3 disposed adjacent to each other among the electrode leads of battery cells is referred to as a first lead group, and a group of other electrode leads 113a1, 113a2, and 113b3 disposed spaced apart from the first lead group and adjacent to each other is referred to as a second lead group, the first guide plate 451 may be electrically connected by being in contact with at least one electrode lead 113a1 belonging to the first lead group. The first guide plate 451 may include a conductive plate 451b for electrical connection through contact. The first guide plate 451 may include a first electrode terminal 161. For reference, in FIG. 7, some 113a1, 113a2, and 113a3 of the electrode leads may be positive electrode leads, and the remaining electrode leads 113b1, 113b2, and 113b3 may be negative electrode leads.

The second guide plate 452 may be electrically connected by being in contact with another portion 113b3 of the electrode leads of the battery cells. For example, the second guide plate 452 may be electrically connected by being in contact with at least one electrode lead 113b3 belonging to the second lead group. The second guide plate 452 may include a conductive plate 452b for electrical connection through contact. The second guide plate 452 may be disposed to be spaced apart from the first guide plate 451. In addition, the second guide plate 452 may include a second electrode terminal 162.

The connection plate 453 may be electrically connected by being in contact with other portions of the electrode leads 113a2, 113a3, 113b1, and 113b2 of the battery cells. Here, all other portions of the electrode leads of the battery cells may be remaining electrode leads that are not connected to the first and second guide plates 451 and 452. For example, the connection plate 453 may include a first connection plate 4531 that is in contact with the electrode leads 113b2 and 113a3, which are not in contact the first guide plate 351 among the electrode leads 113a1, 113b2, and 113a3 belonging to the first lead group to electrically connect the electrode leads 113b2 and 113a3 to each other. The connection plate 453 may include a second connection plate 4532 that is in contact with the electrode leads 113b1 and 113a2, which are not in contact the first guide plate 351 among the electrode leads 113b1, 113a2, and 113b3 belonging to the first lead group to electrically connect the electrode leads 113b1 and 113a2 to each other. The connection plates 453 (4531 and 4532) may include conductive plates 4531b and 4532b for electrical connection by contact.

The connection plate 453 may electrically connect the first electrode terminal 161 of the first guide plate 451 to the second electrode terminal 161 of the second guide plate 452 when the battery module operates. For example, in the case of FIG. 8, the first electrode terminal 161 of the first guide plate 451 may be connected to the second electrode terminal 162 of the second guide plate 453 through the electrical connection (113a1 → 113b1 → 113a2 → 113b2 → 113a3 → 113b3) of the electrode leads.

The shapes of the first and second guide plates 451 and 452 and the connection plate 453 may be determined by considering the arrangement of elements (electrode terminals and electrode leads) to be electrically connected. FIG. 8 illustrates guide plates 451 and 452 provided in an L-shape to connect the electrode terminals 161 and 162 to some electrode leads 113a1 and 113b3 of the lead group and connection plates 4531 and 4532 provided in a square shape to connect the remaining electrode leads 113b2 and 113a3 of the first lead group to the remaining electrode leads 113b1 and 113a2 of the second lead group respectively.

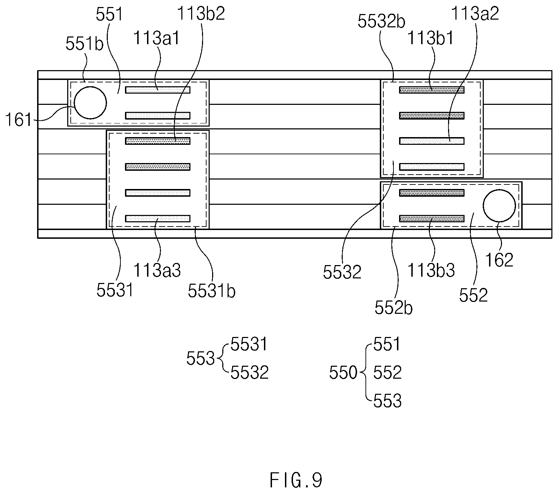

FIG. 9 is a perspective view illustrating a fourth modified example of the electrical connection of the guide plate of FIG. 2. As illustrated in FIG. 9, the guide plate 550 may include first and second guide plates 551 and 552 and a connection plate 553. The battery module according to this modified example is different from the battery module of the third modified example in shapes of first and second guide plates. In this modified example, the first and second guide plates 551 and 552 may be provided in rectangular shapes extending from the electrode leads 113a1 and 113b3 to the outside of the battery cells, respectively. Thus, the battery module according to this modified example is different from the battery module of the third modified example in positions of electrode terminals 161 and 162. As described above, the positions of the electrode terminals 161 and 162 may be easily changed by changing the shapes of the first and second guide plates 551 and 552.

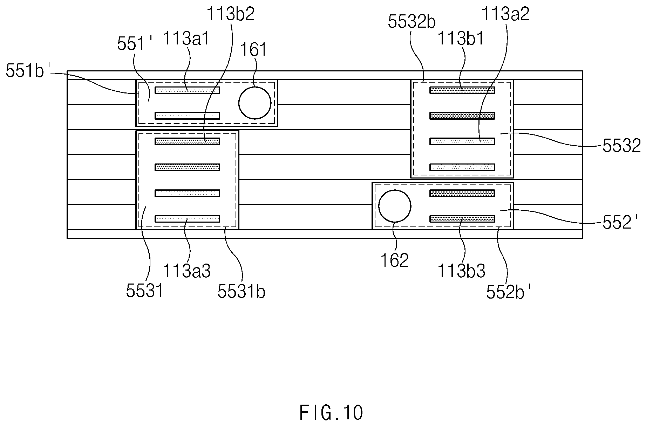

FIG. 10 is a perspective view illustrating a fifth modified example of the electrical connection of the guide plate of FIG. 2. As illustrated in FIG. 10, the guide plate 550 may include first and second guide plates 551' and 552' and connection plates 553 (5531 and 5532). The battery module according to this modified example is different from the battery module of the fourth modified example in shapes of first and second guide plates. In this modified example, the first and second guide plates 551' and 552' may be provided in rectangular shapes extending from the electrode leads 113a1 and 113b3 to the inside of the battery cells, respectively. Thus, the battery module according to this modified example is different from the battery module of the fourth modified example in positions of electrode terminals 161 and 162.

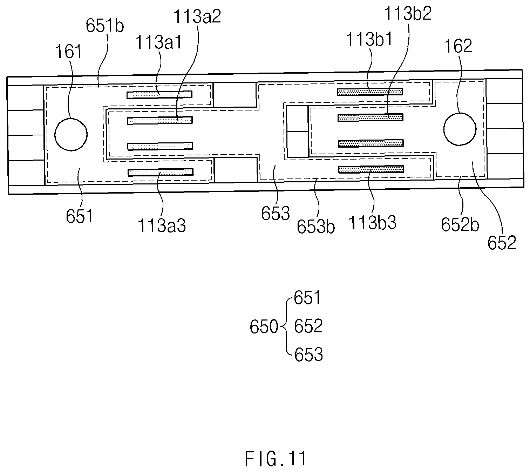

FIG. 11 is perspective view illustrating a sixth modified example of the electrical connection of the guide plate of FIG. 2. As illustrated in FIG. 11, the guide plate 650 may include first and second guide plates 651 and 652 and a connection plate 653.

The first guide plate 651 may be electrically connected by being in contact with some portions 113a1 and 113a3 of the electrode leads of the battery cells. For example, when a group of electrode leads 113a1, 113a2, and 113a3 disposed adjacent to each other among the electrode leads of battery cells is referred to as a first lead group, and a group of other electrode leads 113b1, 113b2, and 113b3 disposed spaced apart from the first lead group and adjacent to each other is referred to as a second lead group, the first guide plate 651 may be electrically connected by being in contact with electrode leads 113a1 and 113a3 belonging to the first lead group. The first guide plate 651 may include a conductive plate 651b for electrical connection through contact. The first guide plate 651 may include a first electrode terminal 161. For reference, in FIG. 11, some 113a1, 113a2, and 113a3 of the electrode leads may be positive electrode leads, and the remaining electrode leads 113b1, 113b2, and 113b3 may be negative electrode leads.

The second guide plate 652 may be electrically connected by being in contact with another portion 113b2 of the electrode leads of the battery cells. For example, the second guide plate 652 may be electrically connected by being in contact with the electrode lead 113b2 belonging to the second lead group. The second guide plate 652 may include a conductive plate 652b for electrical connection through contact. In addition, the second guide plate 652 may include a second electrode terminal 162.

The connection plate 653 may be electrically connected by being in contact with other portions of the electrode leads 113a2, 113b1, and 113b3 of the battery cells. Here, all other portions of the electrode leads of the battery cells may be remaining electrode leads that are not connected to the first and second guide plates 651 and 652. For example, the connection plate 653 may be in contact with the electrode lead 113a2, which is not in contact with the first guide plate 351 among the electrode leads 113a1, 113a2, and 113a3 belonging to the first lead group, and the electrode leads 113b1 and 113b3, which are not in contact with the second guide plate 652 among the electrode leads 113b1, 113b2, and 113b3 belonging to the second lead group to connect the electrode leads to each other. The connection plate 653 may include a conductive plate 653b for electrical connection through contact.

The connection plate 653 may electrically connect the first electrode terminal 161 of the first guide plate 651 to the second electrode terminal 161 of the second guide plate 652 when the battery module operates. For example, in the case of FIG. 11, the first electrode terminal 161 of the first guide plate 651 may be connected to the second electrode terminal 162 of the second guide plate 652 through the electrical connection (113a1/113a3 → 113b1/113b3 → 113a2 → 113b2) of the electrode leads.

The shapes of the first and second guide plates 651 and 652 and the connection plate 653 may be determined by considering the arrangement of elements (electrode terminals and electrode leads) to be electrically connected. FIG. 11 illustrates a first guide plate 651 provided in a C-shape to connect the electrode terminal 161 and some electrode leads 113a1 and 113a3 of the first lead group, a second guide plate 652 provided in a T-shape to connect the electrode terminal 162 and some electrode leads 113b2 of the second lead group, and a connection plate 653 provided in a Y-shape to connect the remaining electrode leads 113a2 of the first lead group and the remaining electrode leads 113b1 and 113b3 of the second lead group as an example.

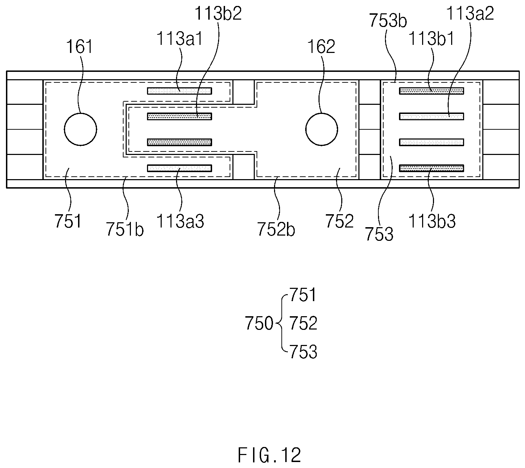

FIG. 12 is a perspective view illustrating a seventh modified example of the electrical connection of the guide plate of FIG. 2. As illustrated in FIG. 12, the guide plate 750 may include first and second guide plates 751 and 752 and a connection plate 753.

The first guide plate 751 may be electrically connected by being in contact with some portions 113a1 and 113a3 of the electrode leads of the battery cells. For example, when a group of electrode leads 113a1, 113b2, and 113a3 disposed adjacent to each other among the electrode leads of battery cells is referred to as a first lead group, and a group of other electrode leads 113b1, 113a2, and 113b3 disposed spaced apart from the first lead group and adjacent to each other is referred to as a second lead group, the first guide plate 751 may be electrically connected by being in contact with some electrode leads 113a1 and 113a3 belonging to the first lead group. The first guide plate 751 may include a conductive plate 751b for electrical connection through contact. The first guide plate 751 may include a first electrode terminal 161. For reference, in FIG. 12, some 113a1, 113a2, and 113a3 of the electrode leads may be positive electrode leads, and the remaining electrode leads 113b1, 113b2, and 113b3 may be negative electrode leads.

The second guide plate 752 may be electrically connected by being in contact with another portion 113b2 of the electrode leads of the battery cells. For example, the second guide plate 752 may be electrically connected by being in contact with the electrode lead 113b2, which are not in contact with the first guide plate 751, among the electrode leads belonging to the first lead group. The second guide plate 752 may include a conductive plate 752b for electrical connection through contact. In addition, the second guide plate 752 may include a second electrode terminal 162.

The connection plate 653 may be electrically connected by being in contact with other portions of the electrode leads 113b1, 113b2, and 113b3 of the battery cells. Here, all other portions of the electrode leads of the battery cells may be remaining electrode leads that are not connected to the first and second guide plates 751 and 752. For example, the connection plate 753 may be electrically connected by being in contact with the electrode leads 113b1, 113b2, and 113b3 belonging to the second lead group to electrically connect the electrode leads 113b1, 113b2, and 113b3 to each other. The connection plate 753 may include a conductive plate 753b for electrical connection through contact.

The connection plate 753 may electrically connect the first electrode terminal 161 of the first guide plate 751 to the second electrode terminal 161 of the second guide plate 752 when the battery module operates. For example, in the case of FIG. 12, the first electrode terminal 161 of the first guide plate 751 may be connected to the second electrode terminal 162 of the second guide plate 752 through the electrical connection (113a1/113a3 → 113b1/113b3 → 113a2 → 113b2) of the electrode leads.

The shapes of the first and second guide plates 751 and 752 and the connection plate 753 may be determined by considering the arrangement of elements (electrode terminals and electrode leads) to be electrically connected. FIG. 12 illustrates a first guide plate 751 provided in a C-shape to connect the electrode terminal 161 and some electrode leads 113a1 and 113a3 of the first lead group, a second guide plate 752 provided in a T-shape to connect the electrode terminal 162 and the remaining electrode lead 113b2 of the first lead group, and a connection plate 753 provided in a square shape to connect the electrode leads 113b1, 113a2, and 113b3 of the second lead group as an example.

### Embodiment 2

FIG. 13 is a perspective view of a battery pack 200 according to Embodiment 2 of the present invention, and FIG. 14 is an exploded perspective view of the battery pack 200 of FIG. 13. As illustrated in FIGS. 13 and 14, the battery pack 200 according to this embodiment may include a plurality of battery modules 100 and a pack housing 210 that accommodates the plurality of battery modules 100.

The battery module 100 according to this embodiment may be the same as the battery module 100 of the above-described embodiment.

The pack housing 210 according to this embodiment may be a housing having an internal space for accommodating the plurality of battery modules 100. FIG. 14 illustrates a housing including one bottom plate 211 and four vertical plates 213 as an example. FIGS. 13 and 14 illustrate a housing having an opened upper portion, but a plate may be further provided to block an upper opening.

The battery module 100 may be disposed within the pack housing 210 so that a bottom surface of a lower plate 131 of a support frame 130 is in contact with an inner bottom surface of the pack housing 210.

The battery module 100 may include a first guide plate 151 and a second guide plate 152. The first guide plate 151 and the second guide plate 152 may be the same as those described in Embodiment 1.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

## Claims

1. A battery module comprising:
a pouch-type cell provided with an electrode assembly, a pouch-type exterior configured to accommodate the electrode assembly, and an electrode lead electrically connected to the electrode assembly to extend to the outside of the pouch-type exterior; and
a support frame provided with a lower plate disposed to correspond to a bottom surface of the pouch-type cell, and a pair of side plates extending upward from both ends of the lower plate in a width direction, respectively, to define an accommodate space for accommodating at least a portion of the pouch-type cell together with the lower plate,
wherein the electrode lead is disposed on an upper portion of the pouch-type exterior so as to be exposed to the outside of the support fame through an upper opening of the support frame.

2. The battery module of claim 1, wherein the support frame is provided so that a bottom surface of the lower plate is disposed to face an inner bottom surface of a pack housing configured to accommodate the plurality of battery modules and is disposed in the pack housing.

3. The battery module of claim 1, wherein the support frame comprises the upper opening defined between the side plates at an upper end of each of the side plates, and a pair of side openings defined between the side plates at both ends of the lower plate in a longitudinal direction, respectively.

4. The battery module of claim 3, wherein the support frame does not comprise a member connected to at least one of the side plates to entirely block the side openings.

5. The battery module of claim 3, wherein the support frame does not comprise a member connected to at least one of the side plates to entirely block the upper opening.

6. The battery module of claim 1, wherein a length of the pouch-type exterior in a horizontal direction is equal to or less than twice a height of the pouch-type exterior.

7. The battery module of claim 1, further comprising a guide plate disposed above the pouch-type cell and having an insertion slot into which the electrode lead is inserted.

8. The battery module of claim 7, wherein the guide plate comprises:
a first guide plate disposed above the pouch-type cell and having a first insertion slot into which a positive electrode lead of the electrode lead is inserted; and
a second guide plate disposed above the pouch-type cell so as to be spaced apart from the first guide plate and having a second insertion slot into which a negative electrode lead of the electrode lead is inserted.

9. The battery module of claim 8, wherein the guide plate further comprises a connection plate configured to electrically connect a positive electrode lead, which is not inserted into the first insertion slot, to a negative electrode lead, which is not inserted into the second insertion slot.

10. The battery module of claim 1, further comprising a guide plate connected to the support frame above the pouch-type cell,
wherein the pouch-type cell is provided in plurality, and
each of the plurality of pouch-type cells comprises a pair of leads that are disposed to be spaced apart from each other.

11. The battery module of claim 10, wherein, when a group of electrode leads disposed adjacent to each other among the electrode leads of the pouch-type cells is referred to as a first lead group, and a group of other electrode leads disposed to be spaced apart from the first lead group and adjacent to each other is referred to as a second lead group,
the guide plate comprises:
a first guide plate electrically connected by being in contact with at least one electrode lead of the first lead group and comprising a first electrode terminal;
a second guide plate disposed to be spaced apart from the first guide plate, electrically connected by being in contact with at least one electrode lead of the second lead group, and comprising the second electrode terminal; and
a connection plate configured to be electrically connected by being in contact with the electrode lead of the first lead group, which is not in contact with the first guide plate, to the electrode lead of the second lead group, which is not in contact with the second guide plate.

12. The battery module of claim 10, wherein, when a group of electrode leads disposed adjacent to each other among the electrode leads of the pouch-type cells is referred to as a first lead group, and a group of other electrode leads disposed to be spaced apart from the first lead group and adjacent to each other is referred to as a second lead group,
the guide plate comprises:
a first guide plate electrically connected by being in contact with at least one electrode lead of the first lead group and comprising a first electrode terminal;
a second guide plate disposed to be spaced apart from the first guide plate, electrically connected by being in contact with at least one electrode lead of the second lead group, and comprising the second electrode terminal;
a first connection plate electrically connected by being in contact with the plurality of electrode leads of the first lead group, which are not in contact with the first guide plate; and
a second connection plate configured to be electrically connected by being in contact with the plurality of electrode leads of the second lead group, which are not in contact with the second guide plate.

13. The battery module of claim 10, wherein, when a group of electrode leads disposed adjacent to each other among the electrode leads of the pouch-type cells is referred to as a first lead group, and a group of other electrode leads disposed to be spaced apart from the first lead group and adjacent to each other is referred to as a second lead group,
the guide plate comprises:
a first guide plate electrically connected by being in contact with at least one electrode lead of the first lead group and comprising a first electrode terminal;
a second guide plate electrically connected by being in contact with the electrode lead of the first lead group, which is not in contact with the first guide plate and comprising a second electrode terminal; and
a connection plate configured to be electrically connected by being in contact with the plurality of electrode leads of the second lead group.

14. A battery pack comprising:
a plurality of battery modules; and
a pack housing configured to accommodate the plurality of battery modules,
wherein each of the battery modules comprises:
a pouch-type cell provided with an electrode assembly, a pouch-type exterior configured to accommodate the electrode assembly, and an electrode lead electrically connected to the electrode assembly to extend to the outside of the pouch-type exterior; and
a support frame provided with a lower plate disposed to correspond to a bottom surface of the pouch-type cell, and a pair of side plates extending upward from both ends of the lower plate in a width direction, respectively, to define an accommodate space for accommodating at least a portion of the pouch-type cell together with the lower plate,
wherein the electrode lead is disposed on an upper portion of the pouch-type exterior so as to be exposed to the outside of the support fame through an upper opening of the support frame.

15. The battery pack of claim 14, wherein the support frame is disposed within the pack housing so that a bottom surface of the lower plate is disposed to face an inner bottom surface of the pack housing.

16. The battery pack of claim 14, wherein the battery module further comprises:
a first guide plate disposed above the pouch-type cell and having a first insertion slot into which a positive electrode lead of the electrode lead is inserted; and
a second guide plate disposed above the pouch-type cell so as to be spaced apart from the first guide plate and having a second insertion slot into which a negative electrode lead of the electrode lead is inserted.

17. A battery module comprising:
a plurality of battery cells, each of which is provided with an electrode assembly, an exterior configured to accommodate the electrode assembly, and a pair of electrode leads electrically connected to the electrode assembly to extend to the outside of the exterior;
a support frame configured to accommodate at least a portion of the battery cells; and
a guide plate connected to the support frame and electrically connected to the battery cells,
wherein the guide plate comprises:
a first guide plate, which is electrically connec ted by being in contact with a portion of the electrode leads of the battery cells, and comprising a first electrode termi nal;
a second guide plate, which is electrically connected by being in contact with the other portion of the electrode leads of the battery cells, and comprising a second electrode terminal; and
a connection plate, which is in contact with and electrically connected to another portion of the electrode leads of the battery cells to electrically connect the first electrode terminal to the second electrode terminal.

18. The battery module of claim 17, wherein the first guide plate is bent so that the first electrode terminal is disposed on a face of a polyhedron defined by the battery cells, which is different from a face on which the electrode lead electrically connected by being in contact with oneself protrudes among faces of the polyhedron.
